# EUROPEAN PATENT APPLICATION

(11) **EP 3 903 910 A1**
(43) Date of publication of application: **03.11.2021**
(21) Application number: 20382349.7
(22) Date of filing: 29.04.2020
(51) Int. Cl.: B01D 53/32, B01D 53/72, B03C 3/40, B01D 53/66, B03C 3/32

(54) **AIR PURIFIER DEVICE AND RELATED AIR PURIFICATION METHOD**

(71) Applicant: Investech Asia Limited, Hong Kong (HK)
(72) Inventor: SOK, Albertus Coert, 9728MH Groningen (NL); PARLADÉ DE ELÍA, Jorge, 08850 Gavà (Barcelona) (ES)
(74) Representative: Pons

(57) **Abstract**

The present disclosure relates to an air purifier device that enables increasing the efficiency of the air to be purified since it proactively treats the air in the occupied space at the source of contamination and also relates to an air purification method which comprises several steps in order to guarantee the purification of the air, removing particles and microorganisms from the air in an efficient way.

## Description

### OBJECT OF THE INVENTION

The present invention relates to an air purifier device that enables increasing the efficiency of the air to be purified since it proactively treats the air in the occupied space at the source of contamination.

The invention also relates to an air purification method which comprises several steps in order to guarantee the purification of the air, removing particles from the air in an efficient way.

### BACKGROUND OF THE INVENTION

It is known in the state of the art several air purifier technologies that may be used individually, such as HEPA filter, Electrostatic Precipitators (ESPs) and Ionizers, activated carbon, UV technology or Ionizer/Plasma.

A HEPA filter is a "high-efficiency particulate air" or "high-energy particulate arresting". According to NIOSH (the US National Institute for Occupational Safety and Health), a true HEPA filter is one that can trap 99.97 percent of dust particles that are 0.3 microns in diameter. A genuine HEPA filter is much more hygienic than an ordinary one because it will stop mold and mold spores and even some bacteria and viruses. It's cleaning at the microscopic scale. HEPA filters are classified using the five letters A through E, based on how well they capture particles and resist airflow. Type A are the least effective that still meet the basic criteria for HEPA, while type E (at the opposite end of the scale) are military grade filters capable of coping with chemical, radiological, or biological particles. However, HEPA filters add significant pressure drop resulting in larger horsepower motors and increased fan energy.

Electrostatic Precipitators (ESPs) and Ionizers are electronic air cleaners that use a powered electrostatic process to charge particles, which then become attracted to oppositely charged plates or other indoor surfaces to remove airborne particles. However, spark ionizers emit ions and O3 and the more highly effective Hydroxyl- and Oxygen radicals which are not healthy for humans.

Carbon air filters are the filters most commonly used to remove gases. They are designed to filter gases through a bed of activated carbon (also called activated charcoal) and are usually used to combat volatile organic compounds (VOCs) released from common household products. They are also often used to remove odors from the air, such as the smell of tobacco smoke. They cannot remove fine particles like mold, dust, or pollen from the air. Also, carbon air filters have high primary costs, additional space requirements in the air handling units and prohibitive media replacement costs.

In air purifiers, the UV-C light filter, with the wavelength of only 256 nm, is able to kill microorganisms, such as germs and viruses effectively. By destroying the cells, the UV-C light filter will sterilize the microorganisms. However, it just prevents the DNA reproduction of these microorganisms, but not removes them from the air. Also, at high levels, the UV-C light filters can create noxious gases and is mutagenic. Bacteria kill rates are negligible with no effectiveness in the occupied space.

There are also different methods of plasma generation. Dielectric barrier discharge is one of them which consists in a non-thermal discharge generated by the application of high voltages across a non-conducting isolator that prevents the transition of the plasma discharge into an arc.

It is also known the combination of several air purifier technologies of those described above.

One of them is the combination of a 3-in-1 filter technology combined with an UV-C light filter. However, this solution does not avoid the emissions of particles into the room wherein the system is disposed.

Another one is a combination of several filters, including photocatalytic filters and activated carbon filters, together with an UV lamp. However, this solution is not feasible since ions are dismissed into the inside atmosphere.

The device and the method of the present invention enables increasing the efficiency of the air to be purified since they proactively treat the air in the occupied space at the source of contamination, avoiding the above-cited drawbacks.

### DESCRIPTION OF THE INVENTION

The present invention relates to an air purifier device that enables increasing the efficiency of the air to be purified since it proactively treats the air in the occupied space at the source of contamination.

The air purifier device comprises:
- an air inlet configured to carry out the air intake, said air comprising particles and microorganisms;
- a first filter configured to retain the particles of the air with a size bigger or equal to 2,5 micrometer;
- a fan configured to direct the air comprising particles and microorganisms from the air inlet to a plasma chamber through the first filter;
- voltage supply means;
- wherein the plasma chamber comprises:
   ∘ at least one high voltage electrode comprising a metal grid on either side of an isolator comprising two sides; and
   ∘ wherein the voltage supply means are configured to supply a voltage difference between the metal grids disposed on the sides of the insulator in such a way that a plasma is generated on the metal grids, and the O₂ and H₂O in the air are ionized and converted into O₃ and Hydroxyl- and Oxygen radicals;
- a second filter being a granulated active-carbon filter configured to purify and convert at least a portion of O₃ into O₂;
- a third filter configured to retain particles of the air with a size smaller than 2,5 micrometer;
- an air outlet configured to carry out the outlet of the air once purified;
- a control unit configured to control the fan and/or voltage supply means.

Preferably, the device comprises an upper part wherein the air inlet is disposed and a lower part wherein the air outlet is disposed. This allows to purify the air that it is breathed by the users capturing the air from the upper part at the same height than that of the users and clean it from harmful particles such as viruses like Covid-19, SARS I and SARS II among others and various past, actual, and future epidemic and pandemic viruses, bacteria and fine dust. Due to this disposition of the air inlet and the air outlet, it is possible to capture more air from the room and increase effectiveness and area coverage with less power consumption to attract all the air from the room with regard to the devices of the state of the art. Moreover, collecting the air from the upper part it is avoided to collect large particles from floating or lying at the floor level (which usually is cleaned by vacuum cleaners). Contrary to capturing from the upper part, the state-of-the-art air purifiers collect from the floor level, which causes quick saturation of the fine filter.

Preferably, the first filter is a labyrinth filter type. This increases 5 times the filtering area with regard to the state-of-the-art filters that in average reduce airflow by 10-30% and reduces the amount of particles, preferably dust, to be treated in the third filter, causing prolonged service life.

Preferably, the voltage supply means configured to supply a high voltage difference between the two metal grids in the interval between 1800 and 2800 V. Preferably, the two metal grids are isolated grids. Therefore, no electrons flow and no waste of energy occurs. Preferably, it is generated an electric field of 100 times/second at a frequency of 50Hz or 120 times/second at a frequency of 60Hz, wherein the plasma is ignited at about 850V.

Thus constituted, the plasma chamber is configured to create O₃ and the more highly effective Hydroxyl- and Oxygen radicals that clean the air from viruses, bacteria, micro-organisms, VOC, odor and/or gases, not emitting ions and not requiring maintenance, generating a larger surface of plasma, since both sides of the at least two metal grids acting as electrodes have a bigger surface than the area of the devices (needles) used in the state of the art and thus can create a much higher quantity of plasma. So, with the device of the present invention a much higher quantity of air can be purified and thus the efficiency and effectiveness of the device is much better.

The two metal grids acting as electrode are fully isolated in the non-confronted sides and thus no electrons are flowing. In this way, there is no power consumption when continuously loading high-voltage on either side of the two metal grids.

The amount of plasma created will automatically directly depend on the amount of airflow along the device.

The device so configured allows a complete air purification in an enclosure including all organic and (micro)biological elements coming from the environment or generated inside the enclosure. The disposition of the second filter, being a granulated active-carbon filter will be self-cleaned by the plasma and also will convert at least a portion of O₃ into O₂. Thus, the second filter will last long term (expected service life of over 10 years) contrary to the air purifiers of the state of the art that use a carbon filter as initial stage and require end user to change it frequently 3-6 months.

Furthermore, the third filter is preferably a HEPA filter and only receives disinfected air coming from plasma chamber and it will never catch microorganisms such as bacteria, mould and spores that could reproduce inside the third filter and be emitted into the enclosure, contrary to the air purifiers devices of the state of the art wherein the HEPA filter is disposed before a purification system (equipped with UV light or Corona discharge plasma generation) so it gets filled up with micro-organisms that may grow inside and contribute to air pollution. The life of the third filter being a HEPA filter in combination with the plasma chamber of the present invention is much longer and is calculated to be 3 to 4 times a normal life span.

The present invention also relates to an air purification method carried out in the air purifier device described above, wherein the method comprises several steps in order to guarantee the purification of the air, removing particles from the air in an efficient way.

These steps are the following:
- a first step of entry of air comprising particles in the device;
- a second step of filtering wherein is carried out the retaining of the particles of the air with a size bigger or equal to 2,5 micrometer;
- a third step of force convention of the air comprising particles before a fourth step;
- wherein the fourth step is a step of generating plasma and ionizing the O₂ and H₂O in the air converting them into O₃ and Hydroxyl- and Oxygen radicals;
- a fifth step of filtering wherein is carried out the purifying and converting of at least a portion of O₃ into O₂;
- a sixth step of filtering wherein is carried out the retaining of the particles of the air with a size smaller than 2,5 micrometer;
- a seventh step of output of the air once purified.

### BRIEF DESCRIPTION OF THE DRAWINGS

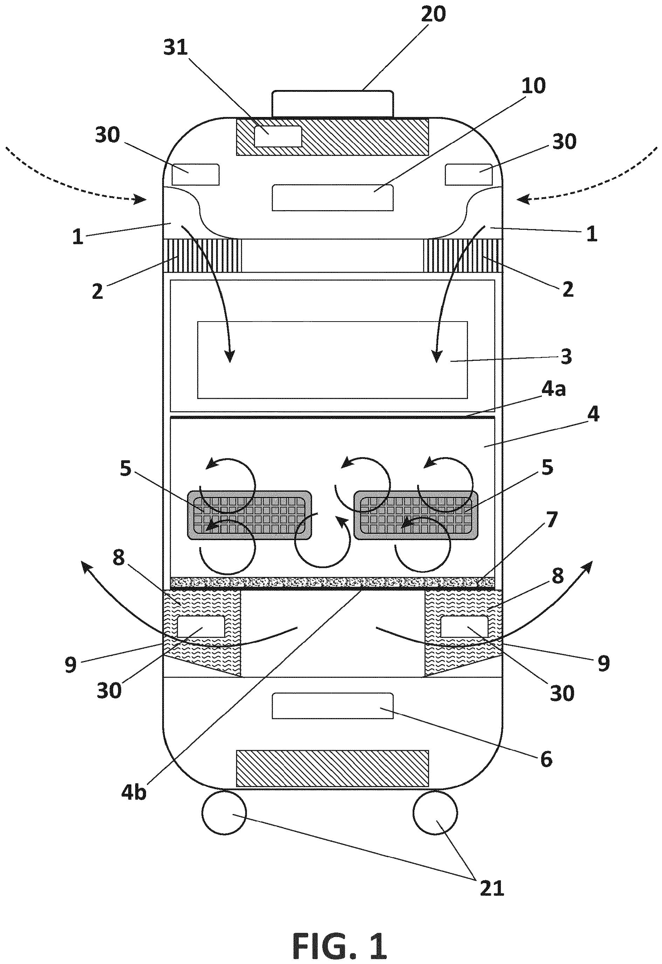

Figure 1 shows a section view of the of the air purifier device of the present invention.

### PREFERRED EMBODIMENT OF THE INVENTION

The present invention relates to an air purifier device that enables increasing the efficiency of the air to be purified since it proactively treats the air in the occupied space at the source of contamination.

The air purifier device comprises:
- an air inlet (1) configured to carry out the air intake, said air comprising particles; The air inlet (1) for example can also have a shape in that way that particles are collected by centrifugal forces;
- a first filter (2) configured to retain the particles of the air with a size bigger or equal to 2,5 micrometer;
- a fan (3) configured to direct the air comprising particles from the air inlet (1) to a plasma chamber (4) through the first filter (2);
- voltage supply means (6);
- wherein the plasma chamber (4) comprises:
   ∘ at least one high voltage electrode comprising a metal grid (5) on either side of an isolator comprising two sides; and
   ∘ wherein the voltage supply means (6) are configured to supply a voltage difference between the metal grids (5) disposed on the sides of the insulator in such a way that a plasma is generated on the two metal grids (5) and the O₂ and H₂O of the air are ionized and converted into O₃ and Hydroxyl- and Oxygen radicals;
- a second filter (7) being a granulated active-carbon filter configured to purify and convert at least a portion of O₃ into O₂;
- a third filter (8) configured to retain particles (1) of the air with a size smaller than 2,5 micrometer;
- an air outlet (9) configured to carry out the outlet of the air once purified;
- a control unit (10) configured to control the fan (3) and/or voltage supply means (6).

The device comprises an upper part wherein the air inlet (1) is disposed and a lower part wherein the air outlet (9) is disposed.

Preferably, the device further comprises a handle or grip (20) configured to transport the device disposed in the upper part and optionally several wheels (21) disposed in the lower part.

Preferably, the device further comprises several sensors (30) (for gaseous and PM (size particle) and indicators (31) (Air quality index, warning to either wash or change the first filter). The sensors (30) are disposed in the upper part for checking the quality of air at the air inlet (1) and/or in the lower part for checking the quality of air at the air outlet (9) giving information for sub-level operation and for filter change needed.

Preferably, the first filter (2) is a labyrinth filter type. It removes particles like most of the larger dust, hair, pollen. It is washable for extended life and to avoid regular replacement and preferably being made of nanofiber, polyester, polyurethane, textile or of a combination of them.

Preferably, the fan (3) comprises a radial blower which provides low speed and noise.

Preferably, the plasma chamber (4) is made of AIMg3 or any other non oxidizing metal material.

Preferably, the plasma chamber (4) further comprises two metal grills (4a, 4b) of the plasma chamber (4), preferably made of Al Mg1. The two metal grills (4a, 4b) are disposed on top and bottom of the plasma chamber (4) and prevent the escape of electromagnetic radiation out of the plasma chamber (4).

Preferably, the plasma chamber (4) further comprises a transformer for the voltage supplied by the voltage supply means (6).

Preferably, the second filter (7) being a granulated active-carbon filter configured to purify and convert at least a portion of O₃ into O₂ is disposed adjacent to the plasma chamber (4), preferably fixed on the bottom of the plasma chamber (4).

Also, the third filter (8) configured to retain particles (1) of the air with a size smaller than 2,5 micrometer is a Hyper HEPA fine filter of class 15 or 16.

Preferably, the air outlet (9) configured to carry out the outlet of the air once purified is a 360° steerable air outlet.

## Claims

1. Air purifier device which comprises:
- an air inlet (1) configured to carry out the air intake, said air comprising particles;
- a first filter (2) configured to retain the particles of the air with a size bigger or equal to 2,5 micrometer;
- a fan (3) configured to direct the air comprising particles from the air inlet (1) to a plasma chamber (4) through the first filter (2);
- voltage supply means (6);
- wherein the plasma chamber (4) comprises:
∘ at least one high voltage electrode comprising a metal grid (5) on either side of an isolator comprising two sides; and
∘ wherein the voltage supply means (6) are configured to supply a voltage difference between the metal grids (5) disposed on the sides of the insulator in such a way that a plasma is generated on the metal grids (5), and the O₂ and H₂O in the air are ionized and converted into O₃ and Hydroxyl- and Oxygen radicals;
- a second filter (7) being a granulated active-carbon filter configured to purify and convert at least a portion of O₃ into O₂;
- a third filter (8) configured to retain particles (1) of the air with a size smaller than 2,5 micrometer;
- an air outlet (9) configured to carry out the outlet of the air once purified;
- a control unit (10) configured to control the fan (3) and/or voltage supply means (6).

2. The air purifier device of claim 1 **characterised in that** it further comprises an upper part wherein the air inlet (1) is disposed and a lower part wherein the air outlet (9) is disposed.

3. The air purifier device of any one of the previous claims **characterised in that** the first filter (2) is a labyrinth filter type.

4. The air purifier device of any one of the previous claims **characterised in that** the voltage supply means (6) are configured to supply a voltage difference between the two metal grids (5) in the interval between 1800 and 2800 V.

5. The air purifier device of any one of the previous claims **characterised in that** the two metal grids (5) are isolated grids.

6. The air purifier device of any one of the previous claims **characterised in that** the third filter is a HEPA filter, preferably a Hyper HEPA fine filter of class 15 or 16.

7. The air purifier device of any one of the previous claims **characterised in that** it further comprises an upper part wherein the air inlet (1) is disposed and a lower part wherein the air outlet (9) is disposed.

8. The air purifier device of any one of the previous claims **characterised in that** it further comprises a handle or grip (20) configured to transport the device disposed in the upper part and optionally several wheels (21) disposed in the lower part.

9. The air purifier device of any one of the previous claims **characterised in that** it further comprises sensors (30) configured to detect gaseous particles and/or to detect the size of the particles and/or indicators (31) of air quality.

10. The air purifier device of any one of the previous claims **characterised in that** the plasma chamber (4) further comprises two metal grills (4a, 4b) disposed on top and bottom of the plasma chamber (4).

11. The air purifier device of any one of the previous claims **characterised in that** the plasma chamber (4) further comprises a transformer for the voltage supplied by the voltage supply means (6).

12. The air purifier device of claim 10 **characterised in that** the second filter (7) being a granulated active-carbon filter configured to purify and convert at least a portion of O₃ into O₂ is disposed adjacent to the plasma chamber (4), preferably fixed on the bottom of the plasma chamber (4).

13. The air purifier device of any one of the previous claims **characterised in that** the air outlet (9) configured to carry out the outlet of the air once purified is a 360° steerable air outlet.

14. An air purification method carried out in the air purifier device of any of the previous claims, **characterised in that** the method comprises the following steps:
- a first step of entry of air comprising particles in the device;
- a second step of filtering wherein is carried out the retaining of the particles of the air with a size bigger or equal to 2,5 micrometer;
- a third step of force convention of the air comprising particles before a fourth step;
- wherein the fourth step is a step of generating plasma and ionizing the O₂ and H₂O in the air converting them into O₃ and Hydroxyl- and Oxygen radicals;
- a fifth step of filtering wherein is carried out the purifying and converting of at least a portion of O₃ into O₂;
- a sixth step of filtering wherein is carried out the retaining of the particles of the air with a size smaller than 2,5 micrometer;
- a seventh step of output of the air once purified.
